# EUROPEAN PATENT APPLICATION

(11) **EP 1 345 336 A1**
(43) Date of publication of application: **17.09.2003**
(21) Application number: 02360084.4
(22) Date of filing: 11.03.2002
(51) Int. Cl.: H04B 3/23, H04M 9/08, H04B 3/20

(54) **Automatic gain control method for echo attenuation**

(71) Applicant: ALCATEL, 75008 Paris (FR)
(72) Inventor: Bauduin, Stéphane, 67400 Illkirch-Graffenstaden (FR); Hammann, Pierre, 67150 Erstein (FR)
(74) Representative: Rausch, Gabriele, Dr.

(57) **Abstract**

The present invention concerns a method for treating echo delays in telecommunications performed at least partly over Internet Protocol link(s), characterised in that it mainly comprises the steps of:
- estimating, at least once, the average transmission path or communication link global delay, and
- adapting consequently the gain switching attenuation of an echo cancellation algorithm running on the concerned used telecommunication terminal.

## Description

The present invention concerns generally the quality of telecommunications, especially of audio communications, and more particularly a method for treating echo delays in telecommunications and a method for removing echo in an audio communication.

In certain communication modes, the users are exposed to the negative effects, in terms of comfort, resulting from echo-type phenomenons.

More particularly, audio communication quality faces a major problem when the local phone user is in hands free or in group listening mode.

Indeed, without any processing, the far end user would perceive his own voice delayed because of the acoustic coupling between the loudspeaker and the microphone of the local phone. The signal received by said local microphone is made of the direct propagation of the acoustic wave and of its multiple reflections on the surrounding walls.

It must also be underlined that the longer the network transmission delay, the higher the disturbance. Thus, this phenomenon is particularly exacerbated on IP networks which can show huge delays.

Among the solutions which have been proposed in order to handle this problem, one can mention the so-called Echo Canceller algorithms. These algorithms try to be compliant with ITU-T G. 131 / ETSI ETR 250 specifications, which standard recommends communication echo tolerance according to global delays for talker echo. It deals with echo caused by signal reflections at the 2-wire/4-wire hybrids in a public switching telephone network (PSTN). It shows the minimum requirements of the Talker Echo Loudness Rating (TELR = magnitude of the original signal relative to its echo) as a function of the mean one-way transmission time.

In a VoIP (Voice over Internet Protocol) system, only acoustic echo problems are faced: hybrid echo (also called line echo) does not exist. It is assumed that the impairments due to the echo increases with its level and that delays are the same for acoustic echoes in a VoIP system as for hybrid echoes. Therefore, the G. 131 TELR requirements can be applied to acoustic echoes in an IP network.

Classical hands free and group listening algorithms mix two methods in order to try to alleviate the acoustic echo problem, namely:
- pure adaptive filtering echo cancellation, wherein a replica of the echo is synthesised and then substracted from the microphone incoming sound signal sample, and,
- gain switching on receiving and/or sending paths, wherein depending on speech levels measurements updated by the algorithm, some attenuations are applied on the receiving path (towards the loudspeaker) or on the sending path (from the microphone) or on both at the same time. In both cases, the echo suppressor attenuates the signal of the less energetic path.

However, the attenuations introduced by the gain switching algorithm make the communication less natural and hence the attenuations values must not be too large.

Adaptive filtering echo cancellation alone cannot be sufficient enough for suppressing the echo while keeping up a communication of sufficient quality for the user.

To overcome this limitation, it has already been proposed to associate adaptive filtering echo cancellation with gain switching so as to be able to use lower attenuations and hence provide a more interactive communication (ensuring the best possible full duplex hands-free or group listening communication).

Such adaptative filtering echo cancellation and gain switching are generally assisted by a non linear processor (NLP) device used on the sending path in order to attenuate the residual echo.

A largely unsatisfying situation exists in connection with VoIP systems, wherein important delays can occur, due to the fact that the actual gain switching algorithms are tuned for a given delay.

Thus, in order to achieve a good TELR with possible occurring huge delays, one must use a large amount of gain switching at the expense of the communication quality. Hence, if the actual delay is lower, the gain switching attenuation can exceed greatly TELR requirements, degrading communication intelligibility for an unnecessary and fruitless improvement of the echo removal procedure.

On the contrary, if the occurring echo delay is greater than the tuned one (for example kept low in order to provide constantly decent communication intelligibility), then the echo will not be correctly suppressed by gain switching attenuation and the original inconvenience will remain for the user.

It is a purpose of the present invention to overcome the aforementioned limitation.

It is a further purpose of this invention to provide an audio communication which is optimised in terms of both echo suppression and quality of the communication.

Therefore, the main object of the invention is a method for treating echo delays in telecommunications performed at least partly over Internet Protocol link(s), characterised in that it mainly comprises the steps of:
- estimating, at least once, the average transmission path or communication link global delay, and
- adapting consequently the gain switching attenuation of an echo cancellation algorithm running on the concerned used telecommunication terminal.

The estimation may be done only once when establishing the communication link, but preferably it is performed periodically, as well as the following adaptation step.

The improved algorithm, materialising the inventive method, performs two tasks:
- periodically estimating the global round trip time network delay, named hereinafter Tglobal, and,
- processing this delay information to choose the right gain switching attenuation.

According to an advantageous embodiment of the invention, the estimation step consists in computing the average global delay as the sum of the delays corresponding to vocoder treatment delays on sending and receiving sides, packet treatment delays on sending and receiving sides and the round trip time intrinsic IP network delay.

The used Tglobal (round trip time) is generally the sum of the following delays:
- Tc: vocoder delay at coding side (note that this delay is not the same for all vocoders e.g. G711, G723.1.A., G729.A.B.)
- Td: vocoder delay at decoding side
- Tf: framing delay, negociated
- RTT: round trip time intrinsic IP network delay
- Tj: jitter buffer length at decoding (to take into account of the jitter added on IP packets by the network).

Furthermore, according to a preferred practical embodiment of the invention, the adaptation step consists in choosing a gain switching attenuation value in an adapted preset table according to the value of the estimated average global delay.

Basically, the gain switching tables can, for example, map three delay areas:
- 0 ms < Tglobal < 100 ms: the echo is not perceptible, the low attenuation enables quite full-duplex communication
- 100 ms <= Tglobal < 300 ms: a medium attenuation is applied
- 300 ms <= Tglobal: the very disturbing echo delay requires a high attenuation, which gives a very poor quality communication.

The present invention also concerns a method for removing echo in an audio communication which is at least partly established over an IP link, characterised in that it consists in applying an adaptive filtering echo cancellation method and, simultaneously, a gain switching method as described before, on one or both of the receiving and sending transmission paths.

In order to gain further echo removal, an adaptation of the parameters and/or characteristics of a non linear processor device used on the sending path can also be performed. This adaptation will then, as for the adaptation of the gain switwhing attenuation, be performed according to the estimated delay.

Finally, the invention also relates to a telecommunication terminal to be connected to an Internet Protocol (IP) based network, characterised in that it contains means, especially in the form of an algorithm, able to perform a method as described herein before.

Preferably, said telecommunication terminal consists of an audio terminal with hands free and/or group listening mode facilities.

With the solution proposed herein, it is possible to provide a better hands free communication quality on telecommunication links established over IP networks, the resulting audio quality being close to the one of an analog communication (for which delays are very low).

The present invention is, of course, not limited to the preferred embodiments described herein, changes can be made or equivalents used without departing from the scope of the invention.

## Claims

1. Method for treating echo delays in telecommunications performed at least partly over Internet Protocol link(s), **characterised in that** it mainly comprises the steps of:
- estimating, at least once, the average transmission path or communication link global delay, and
- adapting consequently the gain switching attenuation of an echo cancellation algorithm running on the concerned used telecommunication terminal.

2. Method according to claim 1, wherein the estimation step is performed periodically, as well as the following adaptation step.

3. Method according to anyone of claims 1 and 2, wherein the estimation step consists in computing the average global delay as the sum of the delays corresponding to vocoder treatment delays on sending and receiving sides, packet treatment delays on sending and receiving sides and the round trip time intrinsic IP network delay.

4. Method according to anyone of claims 1 to 3, wherein the adaptation step consists in choosing a gain switching attenuation value in an adapted preset table according to the value of the estimated average global delay.

5. Method for removing echo in an audio communication which is at least partly established over an IP link, **characterised in that** it consists in applying an adaptive filtering echo cancellation method and, simultaneously, a gain switching method according to any of claims 1 to 4, on one or both of the receiving and sending transmission paths.

6. Method according to claim 5, wherein an adaptation of the parameters and/or characteristics of a non linear processor device used on the sending path is also performed.

7. Telecommunication terminal to be connected to an Internet Protocol (IP) based network, **characterised in that** it contains means, especially in the form of an algorithm, able to perform a method according to any of claims 1 to 6.

8. Telecommunication terminal according to claim 7, wherein it consists of an audio terminal with hands free and/or group listening mode facilities.
